**Europäisches Patentamt**

**European Patent Office**

**Office européen des brevets**

(19)

(11) Veröffentlichungsnummer: **0 347 446 B1**

# (12) EUROPÄISCHE PATENTSCHRIFT

(45) Veröffentlichungstag der Patentschrift:
**03.04.91 Patentblatt 91/14**

(51) Int. Cl.⁵ : **F02D 41/16**

(21) Anmeldenummer: **88909992.5**

(22) Anmeldetag : **23.11.88**

(86) Internationale Anmeldenummer:
**PCT/DE88/00745**

(87) Internationale Veröffentlichungsnummer:
**WO 89/05905 29.06.89 Gazette 89/14**

(54) **VERFAHREN UND EINRICHTUNG ZUR BEEINFLUSSUNG DER LUFTZUMESSUNG BEI EINER BRENNKRAFTMASCHINE, INSBESONDERE IM LEERLAUF UND SCHUBBETRIEB.**

(30) Priorität : **24.12.87 DE 3744222**

(43) Veröffentlichungstag der Anmeldung :
**27.12.89 Patentblatt 89/52**

(45) Bekanntmachung des Hinweises auf die
Patenterteilung :
**03.04.91 Patentblatt 91/14**

(84) Benannte Vertragsstaaten :
**DE FR GB IT**

(56) Entgegenhaltungen :
**EP-A- 0 098 909**
**EP-A- 0 244 870**
**DE-A- 3 238 190**
**US-A- 4 508 076**
**US-E- 32 030**

(73) Patentinhaber : **ROBERT BOSCH GMBH**
**Postfach 10 60 50**
**W-7000 Stuttgart 10 (DE)**

(72) Erfinder : **KRAMPE, Wolfgang**
**Narzissenweg 7**
**W-7253 Renningen 2 (DE)**
Erfinder : **BRAUN, Günter**
**Blumenstr. 15**
**W-7120 Bietigheim-Bissingen (DE)**
Erfinder : **JANETZKE, Helmut**
**Liegnitzer Str. 4**
**W-7141 Schwieberdingen (DE)**

## Beschreibung

Verfahren und Einrichtung zur Beeinflussung der Lufzumessung bei einer Brennkraftmaschine, insbesondere im Leerlauf und Schubbetrieb

Stand der Technik

Die Erfindung betrifft ein Verfahren und eine Einrichtung zur Beeinflussung der Luftzumessung bei einer Brennkraftmaschine gemäß den beiden unabhängigen Patentansprüchen.

In der DE-OS 35 15 132 wird ein Verfahren bzw. eine Einrichtung zur Beeinflussung der Luftzumessung für eine Brennkraftmaschine, vorzugsweise im Leerlaufbetrieb und im Schubbetrieb beschrieben. Dabei wird die Drehzahl der Brennkraftmaschine erfaßt und bei erkanntem Leerlaufzustand eine Regelung der Drehzahl der Brennkraftmaschine auf einen aus Betriebsparametern der Brennkraftmaschine und/oder des Kraftfahrzeugs vorbestimmten Wert durch Beeinflussung der Luftzumessung über ein elektrisch ansteuerbares Motorleistungsstellglied durchgeführt. Zur Vermeidung eines verschlechterten Übergangsverhaltens vom Schubbetrieb zum Leerlaufzustand, insbesondere zur Verhinderung des Absterbens des Motors bei einem solchen Übergang wird ferner der für den Leerlaufzustand benötigte Öffnungswinkel der Drosselklappe elektronisch abgespeichert, so daß sich die Drosselklappe im Schubbetrieb nicht weiter schließt als im Leerlauffall.

Eine derartige Vorgehensweise hat zum Nachteil, daß der Regelkreis ein $T_2$-Glied enthält, was bei Motorexemplarstreuungen, wie sie in der Motorfertigung vorkommen, zu Problemen führen kann. Weiterhin erfolgt hier keine Korrektur der angesaugten Luftmenge bezüglich sich verändernden Betriebsparametern, wie z.B. eine Höhenkorrektur. Dadurch muß auch beim Gegenstand der DE-OS 35 15 132 unter ungünstigen Bedingungen mit einem Absterben des Motors gerechnet werden.

Der Erfindung liegt daher die die Aufgabe zugrunde, mit einem Verfahren und einer Einrichtung zur Beeinflussung der Luftzumessung bei einer Brennkraftmaschine der eingangs genannten Art, insbesondere im Schubbetrieb diese Probleme zu beheben. Dies wird durch die Maßnahme erreicht, daß neben der Bildung einer ersten, ein Maß für die im Leerlaufzustand angesaugte Luftmenge und außerhalb dieses Leerlaufzustandes unveränderliche erste Größe im Schubbetrieb der Brennkraftmaschine das elektrisch ansteuerbare Motorleistungsstellglied auf der Basis dieser ersten und einer zweiten Größe, die ein Maß für die im Schubbetrieb tatsächlich angesaugte Luftmenge darstellt, im Sinne einer Regelung der zweiten auf die erste Größe beeinflußt wird.

Ferner sind in diesem Zusammenhang Verfahren und Einrichtungen zur Beeinflussung der Luftzumessung bei Brennkraftmaschinen aus der DE-OS 32 22 363, der DE-OS 34 15 183 sowie der US-RE 32 030 bekannt.

In der DE-OS 32 22 363 wird eine Drehzahlregelung vorzugsweise für die Leerlaufdrehzahl einer Brennkraftmaschine mit einem Zustandsregler beschrieben, dem die Motordrehzahl, die Solldrehzahl sowie ein Lastsignal P zur Auswertung zugeführt werden. Die Drehzahl sowie das Lastsignal werden dabei in gegengekoppelten Proportionalzweigen und das Lastsignal wird zusätzlich in einem verzögernd mitkoppelnden Zweig berücksichtigt. Damit werden sowohl stationäre Zustände wie auch Übergangszustände der Brennkraftmaschine bei wechselnden Lasten und wechselnden Betriebsarten geregelt. Dieser Regler allein ist jedoch noch nicht in der Lage, Toleranzen des Stellgliedes auszugleichen. Daher wurde der vorhergehend beschriebenen Anordnung zur Drehzahlregelung einer Brennkraftmaschine eine Vorrichtung zur Adaption des Stellgliedkennlinienverlaufs nachgeschaltet, wie sie z.B. in der DE-OS 34 15 183 beschrieben wird.

Diese so beschriebene Regeleinrichtung ist relativ aufwendig und enthält zwei $T_1$-Glieder, was bei Motorexemplarstreuungen, wie sie in der Großfertigung vorkommen, zu Problemen führen kann. Weiterhin ist in dem beschriebenen Verfahren noch nichts Spezielles für den Schubbetrieb des Kraftfahrzeuges vorgesehen.

In der US-RE 32 030 wird schließlich ein System beschrieben, bei dem im Schubbetrieb in Abhängigkeit eines den Ansaugdruck messenden Drucksensorsignals entsprechend einer zeitabhängigen Kennlinie das die Luftzufuhr zur Brennkraftmaschine beeinflussende Motorleistungsstellglied im Sinne einer Regelung auf die zeitabhängig vorgegebenen Werte des Ansaugdrucks beeinflußt wird. Die eingangs genannten Nachteile können jedoch durch eine derartige Vorgehensweise nicht behoben werden.

Weiterhin ist für die Saugrohrdruckbestimmung auf die DE-OS 32 38 190 Bezug genommen.

Vorteile der Erfindung

Die Erfindung löst diese Aufgabe mit den kennzeichnenden Merkmalen des ersten Verfahrensanspruchs bzw. des ersten Einrichtungsanspruchs. Neben der Verbesserung des Reglers, der jetzt nur noch ein $T_1$-Glied enthält, ist die Korrektur des Höhenfehlers durch die Schubluftregelung über die gelernte Grundluftmenge besonders hervorzuheben. Auch bei sich änderndem Spulenwiderstand des Leerlaufstellers wird die sich dadurch ändernde Luftmenge bereits während des Schubs wieder ausgeglichen. Weiterhin wird bei einer Fahrt, die in geringer Höhe beginnt und auf großer Höhe unterbrochen wird, bereits vor dem Leerlauf die veränderte Kennlinie des Stellers berücksichtigt und die richtige Luftmenge eingestellt. Da die Schubluftregelung mit dem gleichen Integrator durchgeführt wird, den auch die Drehzahlregelung benutzt, ergeben sich in der Stellgröße immer harmonische Übergänge. Der Integrator zum Lernen der Leerlaufluftmenge arbeitet mit unterschiedlichen Geschwindigkeiten, um so z.B. den störenden Einfluß der Servolenkung klein zu halten, andererseits eine Fehlanpassung der Vorsteuerung mit zu größer Luftmenge schnell korrigieren zu können. Da im echten Leerlauffall, d.h. Fahrzeuggeschwindigkeit = 0 keine Begrenzung der Luftmenge nach unten wirksam ist, können die Motoren, auch bei starken Exemplarstreuungen bei stehendem Fahrzeug niemals über die Schubluftkennliniensteuerung hochlaufen. Sollte beim Anfahren an einer Steigung der Integrator der Leerlaufdrehzahlregelung auf einen sehr hohen Wert gebracht werden, so regelt der Schubluftregler diesen hohen Wert harmonisch auf den nötigen Luftbedarf zurück. (Anfahrhilfe ohne späteres Nachschieben des Motors).

Weitere vorteilhafte Ausgestaltungen der erfindung sind in den unteransprüchen enthalten und ergeben sich in Verbindung mit der nachfolgenden Beschreibung des Ausführungsbeispieles.

Zeichnung

Die Erfindung wird nachstehend anhand des in den Zeichnungen dargestellten Ausführungsbeispieles erläutert. Es zeigen Figur 1 ein Übersichtsschaubild des elektronischen Steuersysems zum Regeln des Schubluft- und Leerlaufbetriebes der Brennkraftmaschine, die Figur 2 zeigt die Gewinnung des Luftmengenvorsteuerwerte, während Figur 3 den zeitlichen Verlauf des Klimaanlagenaufschaltsignales zeigt, in Figur 4 wird die Bildung des Schubluftzuschlages im Schubabschaltbetrieb erläutert, durch Figur 5 und 5B wird die Anlasserschaltung des Handgeschalteten bzw. des Automatikgetriebe-Kraftfahrzeugs gezeigt, Figur 6 zeigt schließlich eine Schubluftkennlinie des Kraftfahrzeuges.

Beschreibung des Ausführungsbeispiels

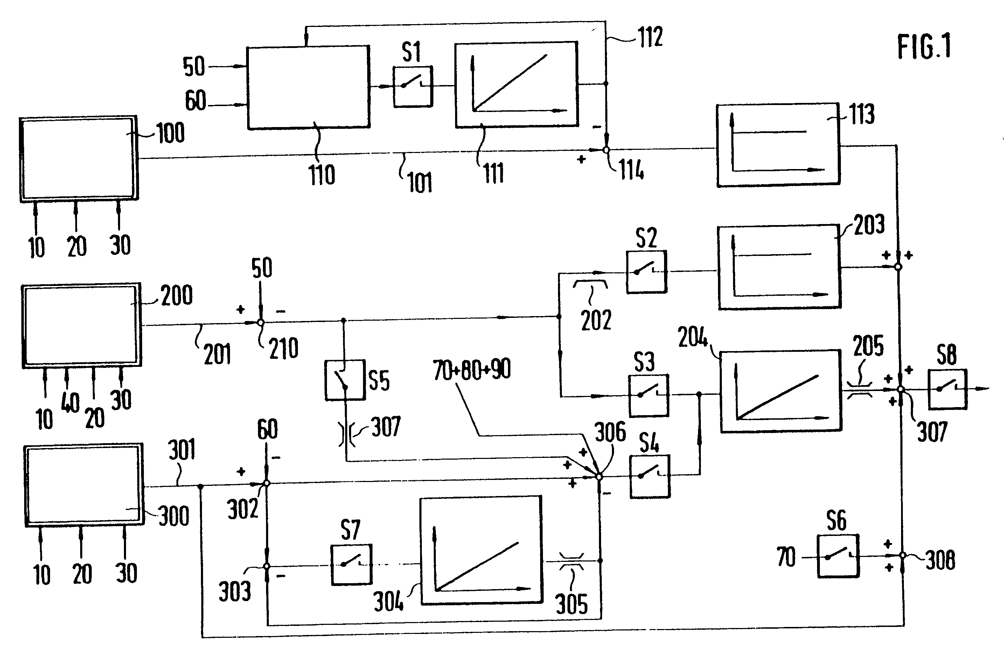

Die Figur 1 zeigt ein Übersichtsschaubild des elektronischen Steuersystems zur Beeinflussung der Luftzumessung bei einer Brennkraftmaschine. Übereinander sind die drei prinzipiellen Zweige des Regelungssystems zu sehen. Im obersten Zweig wird aus den Größen Temperatur 10, dem Drivesignal 20 bei Automatikgetriebefahrzeugen und dem Klimaanlagensignal 30 in der Vorsteuerung Saugrohrrdruck 100 ein Vorsteuerwert 101 für den Saugrohrdruck gewonnen. Weiterhin wird aus dem Drehzahlistwert 50, dem Istwertsignal der angesaugten Luftmenge 60 und dem berechneten Wert 112 des Saugrohristdrucks eine Lufbilanz im Rechner 110 gezogen. Das Ergebnis des Luftbilanzrechners 110 wird über den Schalter S1 an den Integrator 111 weitergeleitet. Das Fahrzeug des bevorzugten Ausführungsbeispieles hat eines anfänglichen Leerweg des Gaspedales der zur Betätigung eines Mikroschalters ausgenutzt wird. Ein weiterer mikroschalter an der Drosselklappe zeigt das Schließen an. Der Schalter S1 wird für die Druckberechnung geschlossen, wenn der Leerlaufmikroschalter am Gaspedal des Kraftfahrzeuges geschlossen ist und die Fahrzeuggeschwindigkeit Null ist bzw. bei Fahrzeugen mit Automatikgetriebe der Wählhebel in der Neutralposition ist und mindestens eine Drehzahlberechnung erfolgt ist. Der Ausgang des Integrators 111 stellt damit den berechneten Saugrohrdruckistwert 112 dar. Die Differenz zwischen dem Saugrohrdruckvorsteuersollwert 101 und dem berechneten Saugrohrdruckistwert 112 wird im Additionspunkt 114 gebildet und dem Proportionalglied 113 zugeführt. Das Ausgangssignal des Proportionalgliedes 113, welches als Zustandsregler wirkt, wird über den Summenpunkt 307 weiter dem Schalter S8 der Stellgliedansteuerung zugeführt.

Der zweite mittlere Zweig stellt eine Drehzahlregelung dar. Aus den Werten Temperatursignal 10, Schubabschaltesignal 40, Drivesignal bei Automatikgetriebefahrzeugen 20 und dem Klimaanlagenbetriebssignal 30 wird in der Vorsteuerung Drehzahl 200 ein Solldrehzahlwert 201 gewonnen. Von diesem Signal wird das Istdrehzahlsignal 50 im Additionspunkt 210 angezogen und die Differenz den Schaltern S2 und S3 zugeführt. Vor dem Schalter S2 ist noch eine Mindestdrehzahlbegrenzung 202 eingefügt. Vom Ausgang des Schalters S2 wird das Differenzsignal über ein Proportionalglied 203 weiter über den Additionspunkt 307 und den Schalter S8 der Stellgliedansteuerung zugeführt. Weiterhin wird das Differenzsignal über den Schalter S3 einem Integrationsregler 204 zugeführt. Auf den Integrationsregler 204 folgt eine Begrenzerstufe 205, darauf wird das Signal über den Additionspunkt 307 und den Schalter S8 ebenfalls dem Stellglied zugeführt.

Der dritte, unterste Zweig in Figur 1 enthält die Schubluftregelung. Aus dem Temperatursignal 10, dem Drivesignal 20 bei Automatikgetriebefahrzeugen und dem Klimaanlagenbetriebssignal 30 wird in der Vorsteuerung Luftmenge 300 ein Luftmengenvorsteuerwert 301 gebildet. Der Luftmengenvorsteuerwert 301 wird einmal ebenfalls auf direktem Weg über die Additionspunkte 308 und 307 dem Schalter S8 der Stellgliedansteuerung zugeführt. Auf diesem Wege kann dem Luftmengenvorsteuerwert 301 über den Schalter S6 noch ein drehzahlabhängiges Signal 70 im Punkt 308 aus einer Schubluftkennlinie aufaddiert werden. Weiterhin wird der Luftmengenvorsteuerwert 301 dem Additionspunkt 302 zugeführt. Gleichzeitig wird im Punkt 302 der Istwert der angesaugten Luftmenge 60 abgezogen. Die so ermittelte Differenz wird einmal über einen weiteren Additionspunkt 303 und den Schalter S7 einem Integrator 304 zugeführt. Der Ausgang des Integrators 304 ist über einen Begrenzer 305 mit negativen Vorzeichen dem Additionspunkt 303 zugeführt. Weiterhin ist die im Punkt 302 gebildete Differenz einem Punkt 306 zugeführt, dem auch der Ausgangswert des Integrators 304 über die Begrenzerschaltung 305 mit negativem Vorzeichen zugeführt ist. Zusätzlich ist dem Punkt 306 über einen Schalter S5 und die Begrenzerschaltung 307 die Differenz zwischen dem Vorsteuerwert für die Solldrehzahl 201 und der Istdrehzahl 50 zugeführt. Schließlich ist dem Punkt 306 noch ein drehzahlabhängiger Wert über die Schubluftkennlinie 70 sowie ein Additionsterm für die Servolenkung bei Schubbetrieb 80 und ein Sollwertzuschlag 90 für die Schubluftregelung bei Schubabschaltung zugeführt.

Funktionell ist der oberste Zweig der Stellgliedansteuerung eine Vorsteuerung 100 für den Saugrohrdruck. Der Vorsteuerwert 101 für den Saugrohrdruck wird aus den Parametern Temperatur 10, Getriebestellung 20 und Klimaanlagenbetriebssignal 30 gewonnen. Der Saugrohrdruckistwert 112 wird rechnerisch aus den meßgrößen Drehzahl 50 und Luftmengendurchsatz 60 gewonnen. Zu den Einzelheiten siehe auch die DE-OS 32 38 190. Die Differenz aus Vorsteuersoll- 101 und Ist-Saugrohrdruck 112 wird über ein Proportionalglied 113, den Additionspunkt 307 und den Schalter S8 Stellgliedansteuerung zugeführt.

Die Drehzahlgegenkopplung wird über den Schalter S2 und ein Proportionalglied 203 im Leerlauffall aktiviert. Das heißt, der Schalter S2 schließt, wenn die Istdrehzahl n unter den Solldrehzahlwert abgefallen ist und der Gaspedalmikroschalter geöffnet ist, d.h. das Gaspedal betätigt ist und die Geschwindigkeit des Fahrzeuges v = 0 ist oder bei Automatikfahrzeugen der Wahlschalter auf Drive steht. Der Schalter S2 wird auch geschlossen, wenn die Istdrehzahl n unter den Solldrehzahlwert abgefallen ist und der Gaspedalmikroschalter geschlossen ist, d.h. das Gaspedal in Ruhestellung ist und v = 0 ist oder bei einem Automatikgetriebefahrzeug sich der Wählhebel in der Stellung Neutral befindet. Der Drehzahlintegralregler 204 wird über den Schalter S3 aktiviert, wenn folgende vier Bedingungen erfüllt sind, der Start beendet ist und die Hauptdrosselklappe geschlossen sowie eine Sperrzeit abgelaufen ist, die beim Schließen der Hauptdrosselklappe gestartet wird. Außerdem ist zweitens Bedingung, daß die Fahrzeuggeschwindigkeit v = 0 ist bei einem nicht Automatikfahrzeug oder bei einem Automatikfahrzeug sich der Wählhebel in der Position Neutral befindet. Weiterhin muß drittens entweder der Mikroschalter geschlossen sein, d.h. das Fahrpedal befindet sich in Ruhestellung oder der Mikroschalter ist geöffnet und damit das Fahrpedal betätigt und die Drehzahl n ist kleiner als die Solldrehzahl. Die vierte Bedingung für das Schließen von Schalter S3 ist, daß die Stellgröße von Punkt 307 kleiner als ein vorgegebener Maximalwert ($TAU_{max}$) ist oder die Drehzahl n größer als die Solldrehzahl ist. Im echten Leerlauffall wird also auf den Vorsteuerwert für die Solldrehzahl 201 über einen PI-Regler, den Schalter S8 und das Bypass-Stellglied ausgeregelt.

Gleichzeitig wird von dem Luftmengenvorsteuerwert 301 der Istwert der angesaugten Luftmenge 60 im Additionspunkt 302 abgezogen und über den Additionspunkt 303 dem Schalter S7 zugeführt. Der Schalter S7 für die Grundluftadaption schließt, wenn folgende vier Bedingungen erfüllt sind, der Start beendet ist und eine Sperrzeit abgelaufen ist, die beim Schließen der Hauptdrosselklappe gesetzt wird und die Vorsteuerwerte konstant sind. Zweitens muß die Drehzahl innerhalb einer gewissen Bandbreite liegen oder der Istwert der angesaugten Luftmenge kleiner als ein vorgegebener Wert abzüglich des Ausgangssignales des Integrators bzw. Grundluftadaptionsspeichers sein. Außerdem muß bei handgeschalteten Fahrzeugen v = 0 sein oder bei Automatikfahrzeugen der Wählhebel in der Position Neutral sein. Als letzte Bedingung für das Schließen des Schalters S7 muß eine Geschwindigkeitsplausibilitätsüberwachung ein Freigabesignal abgeben.

Für das Geschwindigkeitssignal wird eine Plausibilitätsprüfung durchgeführt. Treten oberhalb einer Last- und Drehzahlschwelle innerhalb eines vorgegebenen Zeitraumes keine Impulse auf, wird eine Speicherzelle für ein unplausibles geschwindigkeitssignal gesetzt, das bis zum Ausschalten der Zündung nicht mehr gelöscht werden kann. Werden Impulse oberhalb der Schwellen erkannt und ist der Speicher für ein unplausibles Geschwindigkeitssignal nicht gesetzt, gibt die Plausibilitätsüberwachung ein Signal für plausible Meßwerte ab.

Vom Schalter S7 wird das Signal dem Eingang des Integrators 334 für die Grundluftadaption zugeführt. Der Ausgang des Integrators ist über den Begrenzer 305 subtraktiv dem Additionspunkt 303 zugeführt. Im erkannten Leerlauffall, d.h., wenn der Schalter S7 geschlossen ist, verändert sich der Ausgang des Integrators so lange, bus der Ausgangswert des Integrators gleich der Differenz zwischen dem Luftmengenvorsteuerwert 301 und dem Istwert der angesaugten Luftmenge 60 ist. Eine Besonderheit des Integrators ist es, daß positive Eingangssignale langsamer aufintegriert werden als negative. Dadurch können Adaptionsfehler, die z.B. durch eine ständig eingeschlagene Servolenkung entstehen können, weitgehend vermieden werden. Andererseits ermöglicht die schnellere negative Integration, daß der beim Start aus Sicherheitsgründen hochgewählte Anfangswert der Adaption schnell auf den richtigen Wert zurückgeführt werden kann. Weiterhin wird der Differenzwert des Additionspunktes 302 dem Additionspunkt 306 zugeführt. Außerdem wird dem Additionspunkt 306 der Inhalt des Speichers 304 subtraktiv zugeführt. Über den Schalter S4 kann das Summenergebnis des Punktes 306 dem I-Glied 204 des Drehzahlreglers zugeführt werden. Der Schubluftschalter S4 schließt, wenn folgende fünf Bedingungen erfüllt sind, der Start muß beendet sein und die Drosselklappe geschlossen sein. Weiterhin muß sich das Fahrpedal in Ruhestellung befinden und der zugehörige Mikroschalter geschlossen sein. Als vierte Bedingung muß die gemessene Istluftmasse kleiner als die maximal mögliche Luftdurchsatzmenge am Leerlaufsteller sien oder die Sperrzeit, die beim Schließen der Hauptdrosselklappe gesetzt wird, abgelaufen sein. Die letzte Bedingung ist, daß bei Automatikfahrzeugen die Drivestufe am Wählhebel einlegt sein muß bzw. es sich um ein Handgeschaltetes Fahrzeug handelt. Die gemeinschaftliche Benutzung des I-Gliedes 204 für die Leerlaufdrehazahlregelung und die Schubluftmengensteuerung sorgt für harmonische Übergänge zwischen den beiden Regelungsarten. Weiterhin wird dem Additionspunkt 306 das Differenzsignal vom Additionspunkt 210 zwischen dem Vorsteuerwert für die Solldrehzahl und dem Drehzahlistwert über den Schalter S5 und die Begrenzung 307 zugeführt. Der Schalter S5 schließt sobald die Istdrehzahl unter den Vorsteuerwert für die Sollwertdrehzahl absinkt und gibt damit einen Drehzahlanteil in die Schubluftregelung. Das ergibt im Ergebnis eine Anfahrhilfe. Daher muß das Signal bei Fahrzeugen mit Handgetriebeschaltung auf einen kleineren Wert begrenzt werden, als bei Automatikgetriebefahrzeugen. Weiterhin wird dem Additionspunkt 306 noch ein drehzahlabhängiges Signal 70 über die Schubluftkennlinie zugeführt sowie ein Additionsterm 80 bei einer Fahrzeuggeschwindigkeit ungleich Null um den Energiebedarf für eine eventuell benutzte Servolenkung abzudecken und schließlich ein Sollwertzuschlag 90 für die Schubluftregelung im Schubabschaltebetrieb. Schließlich sind alle Steuerwerte dem Additionspunkt 307 zugeführt und von da aus über den Schalter S8 dem Motorstellgliedantrieb. Während der Startphase ist der Schalter S8 geöffnet. Damit wird gleichzeitig bei dem bevorzugten Ausführungsbeispiel die Bypass-Luftklappe auf einen Wert von 95% der maximalen Durchlaßmenge aufgefahren. Im Anschluß an die Startphase schließt der Schalter S8.

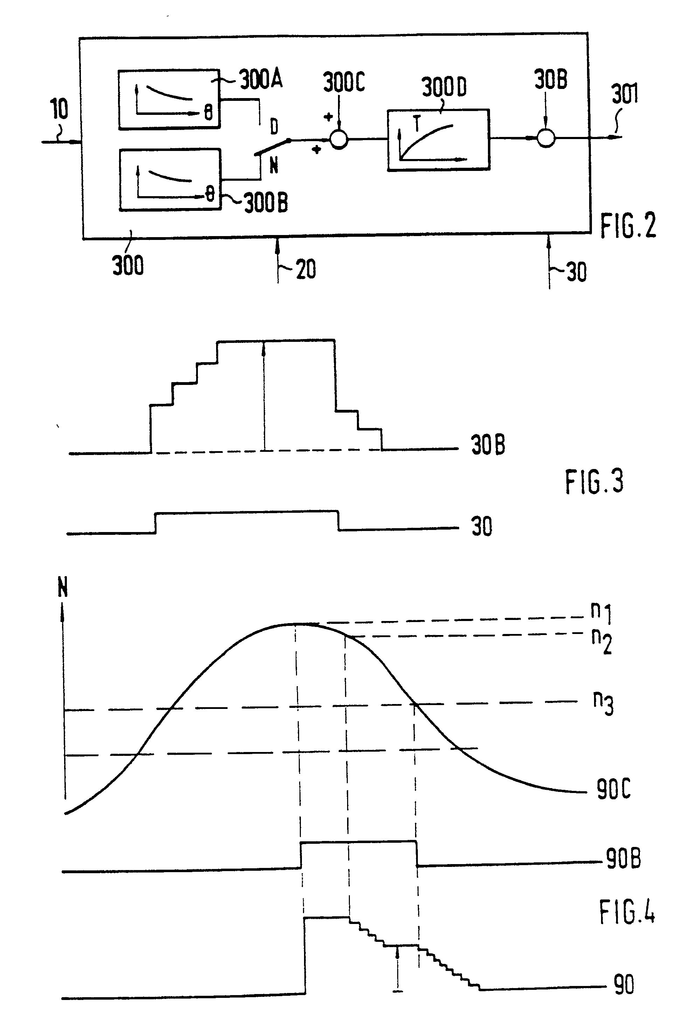

Figur 2 zeigt die Gewinnung des Luftmengenvorsteuerwertes 301 in der Vorsteuerung Luftmenge 300. Mittels einer Temperaturinterpolation wird – abhängig von der Getriebestellung – ein Vorsteuerwert für den Luftdurchsatz errechnet 300A bzw. 300B. Bei Einlegen einer Fahrstufe erfolgt eine einmalige zusätzliche Luftmengenaufschaltung 300C, die über das nachgeschaltete Filter 300D zeitlich abgeregelt wird. Darauf wird das Klimaanlagenbetriebssignal 30B zugefügt, um so den Luftmengenvorsteuerwert 301 zu erhalten.

Figur 3 zeigt den zeitlichen Verlauf der Kompensation des Luftmengenmehrbedarfs für die Klimaanlage über der Zeit. Der Kurvenzug 30 repäsentiert das Schaltsignal des Klimaanlagenschalters. Die Kurve darüber zeigt den zeitlichen Verlauf des Kompensationssignals 30B für die Klimaanlage. Mit dem Einschalten der Klimaanlages wird der Korrekturwert sprungartig auf ein Anteil des maximalen Zuschlags gesetzt und anschließend über eine Rampenfunktion bis zum Maximalwert erhöht. Der Maximalwert kann abhängig von der Getriebestellung unterschiedlich gewählt werden. Beim Ausschalten der Klimaanlage erfolgt zunächst enbenfalls ein Sprung auf einen vorgewählten Anteil des Zuschlages und anschließend eine rampenförmige Abregelung bis zum Wert Null.

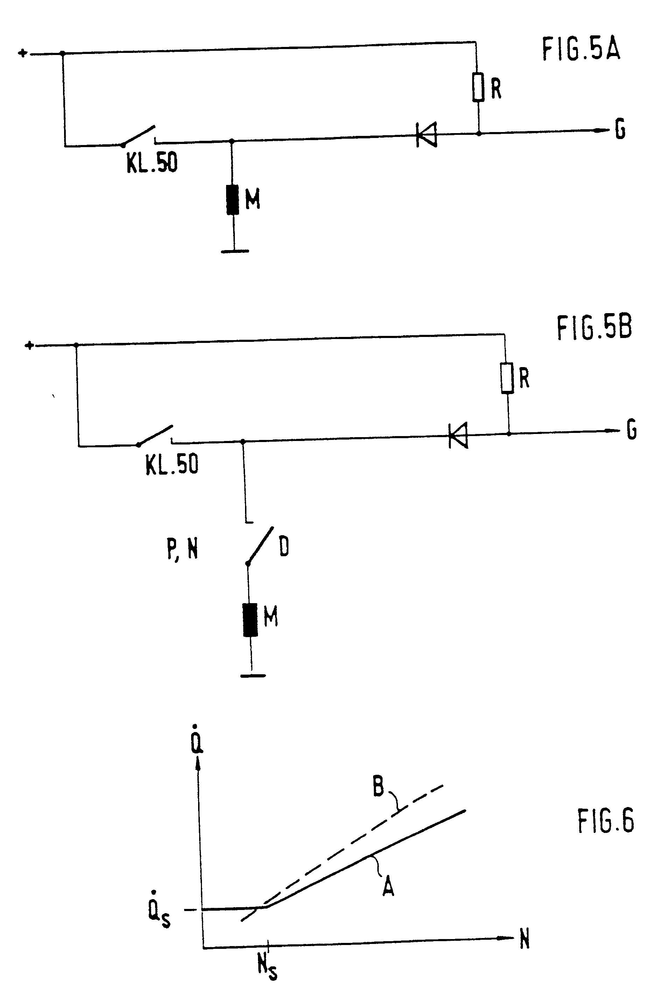

Figur 4 zeigt die Bildung des Sollwertszuschlages bei Schubluftregelung und gleichzeitiger Schubabschaltung. Die oberste Kurve 90C stellt die Drehzahl dar, während Kurve 90B das Schubabschaltsignal repräsentiert. Die unterste Kurve stellt den Sollwertzuschlag 90 dar. Nach dem Drehzahlmaximum $n_1$ folgt zeitlich der Schubbetrieb. Damit wird das Schubabschaltsignal 90B bis zu einer Wiedereinsetzdrehzahl $n_3$ ausgegeben. Gleichzeitig mit dem Erscheinen des Schubabschaltsignales wird der Sollwertzuschlag 90 auf einen Maximalwert gesetzt. Bei Unterschreiten einer Drehzahlschwelle $n_2$ wird dieser Wert mit einem Zeitraster auf einen solldrehzahlabhängigen (aus der Drehzahlvorsteuerung) Restwert abgeregelt. Die Abregelung des Restwertes erfolgt erst nach dem Ende der Schubabschaltung (Abfangen bei starkem Drehzahlabfall !).

An verschiedenen Stellen des Regelkreises wird die Information benötigt, ob es sich um ein Automatikgetriebefahrzeug oder um ein handgeschaltetes Fahrzeug handelt. Im Ausführungsbeispiel wird die in Figur 5A und 5B angegebenen Schaltung zur automatischen Erkennung benutzt. Oben in Figur 5A ist die Anlasserschaltungsversion für ein handgeschaltetes Fahrzeug zu erkennen, während sich die untere Schaltungsanordnung 5B auf ein Automatikschaltgetriebefahrzeug bezieht. Die Klemme 50 (KL. 50) stellt den Anlasserschalter dar, während die Wicklung des Anlasserrelais mit M bezeichnet ist. Ergänzt wird die Schaltung durch den Pull-Up-Widerstand R und eine Entkopplungsdiode. Beim Automatikgetriebefahrzeug ist ein zusätzlicher Shalter vorhanden, der in den Wählhebelstellungen P, N geschlossen ist und in der Drivestellung geöffnet ist. Das Ausgangssignal G wird zur Erkennung des Getriebetyps herangezogen. Im Fahrbetrieb liegt am Ausgang G beim handgeschalteten Fahrzeug Massepotential, währen beim Automatikgetriebefahrzeug am Ausgang G Pluspotential anliegt. Dieses Signal wird zur Erkennung des Getriebetyps ausgenutzt.

Figur 6 zeigt schematisch die Schubluftkennlinie. Auf der X-Achse ist die Drehzahl und auf der Y-Achse die Luftmasse pro Zeiteinheit aufgetragen. Der Kurvenzug B stellt den Luftbedarf für den statischen Motorbetrieb dar. Der Kurvenzug A zeigt die Schu-

bluftkennlinie. $N_s$ stellt die Solldrehzahl dar, während $\dot{Q}_s$ die zugehörige Luftmenge darstellt.

Das erfindungsgemäße Verfahren bzw. eine Einrichtung zur Durchführung des erfindungsgemäßen Verfahrens kann sowohl als Analogschaltung mit mehr oder weniger hohem Integrationsgrad aufgebaut sein, als auch als Digital- bzw. Rechnerschaltung mit unterschiedlichem Integrationsgrad. Auch Lösungen unter Einsatz eines Mikorprozessors oder Mischungen der verschiedenen Formen sind denkbar.

Nicht unerwähnt bleiben sollte, daß es sich beim Ausführungsbeispiel um einen Motor mit Haupt- und Bypassdrosselklappe handelt. Das erfindungsgemäße Verfahren ist aber auch auf Brennkraftmaschinen mit nur einer Drosselklappe anwendbar.

Des weiteren ist bei dem Verfahren und der entsprechenden Einrichtung der luftmengenmsser auch durch einen Luftmassenmesser ersetzbar.

## Ansprüche

1. Verfahren zur Beeinflussung der Luftzumessung für eine Brennkraftmaschine, vorzugsweise im Leerlaufbetrieb und im Schubbetrieb,
   – wobei die Drehzahl der Brennkraftmaschine erfaßt wird und bei erkanntem Leerlaufzustand eine Regelung der Drehzahl der Brennkraftmaschine auf einen aus Betriebsparametern der Brennkraftmaschine und/oder des Kraftfahrzeugs vorbestimmten Wert durch Beeinflussung der Luftzumessung über ein elektrisch ansteuerbares Motorleistungsstellglied durchgeführt wird,
   – wobei die angesaugte Luftmenge erfaßt wird, und im erkannten Leerlaufzustand eine erste, außerhalb des Leerlaufzustandes unveränderliche Größe gebildet wird, die ein Maß für diese Luftmenge darstellt, dadurch gekennzeichnet, daß
   – im erkannten Schubbetrieb der Brennkraftmaschine das elektrisch ansteuerbare Motorleistungsstellglied auf der Basis dieser ersten und einer zweiten Größe, die ein Maß für die im Schubbetrieb tatsächlich angesaugten Luftmenge darstellt, im Sinne einer Regelung der zweiten auf die erste Größe beeinflußt wird.

2. Verfahren nach Anspruch 1, dadurch gekennzeichnet, daß die die Luftmenge im Schubbetrieb darstellende zweite Größe durch Vorsteuerwerte korrigiert wird und/oder die einen gespeicherten Luftmengenwert darstellende erste Größe Korrekturen durch Vorsteuerwerte aufweist.

3. Verfahren nach einem der Ansprüche 1 bis 2, dadurch gekennzeichnet, daß die Speicherung als Integration über der Zeit erfolgt und sich das jeweilige Integrationsergebnis auf ein Steuerkommando statisch halten läßt.

4. Verfahren nach Anspruche 3, dadurch gekennzeichnet, daß die Integrationsgeschwindigkeit, d.h. die Änderungsrate des Integrals bei konstantem Eingangssignal abhängig vom Vorzeichen des Eingangssignales ist.

5. Verfahren nach Anspruch 4, dadurch gekennzeichnet, daß die Integrationsgeschwindigkeit beim negativen Eingangssignal größer ist, als beim positivem Eingangssignal.

6. Verfahren nach einem der Ansprüche 1 bis 5, dadurch gekennzeichnet, daß der gespeicherte Luftmengenwert im Schubbetrieb drehzahlabhängig über die Schubluftkennlinie (70) ergänzt werden kann.

7. Verfahren nach einem der Ansprüche 1 bis 6, dadurch gekennzeichnet, daß bei fahrendem Fahrzeug für variable Zusatzlasten, insbesondere der Servolenkung der Schubluft ein fester Sollbetrag (80) addiert werden kann.

8. Verfahren nach einem der Ansprüche 1 bis 7, dadurch gekennzeichnet, daß ein weiterer fester Betrag beim Einsatz (90) der Kraftstoffschubabschaltung der Schubluft hinzugefügt wird, der bei Unterschreiten einer Drehzahlschwelle zwischen der Kraftstoffabschaltdrehzahl und der Wiedereinsatzdrehzahl mit einem Zeitraster auf einen aus der Vorsteuerung der Drehzahl stammenden solldrehzahlabhängigen Festwert abgeregelt wird und dieser Restwert erst beim Wiedereinsatz abgeregelt wird.

9. Verfahren nach einem der Ansprüche 1 bis 8, dadurch gekennzeichnet, daß der im Schubbetrieb angesaugten Luftmenge noch ein begrenzter Drehzahlgegenkopplungsterm zugefügt wird, dessen minimale Größe abhängig davon ist, ob es sich um ein Fahrzeug mit Automatikgetriebe oder Handschaltgetriebe handelt.

10. Verfahren nach einem der Ansprüche 2 bis 9, dadurch gekennzeichnet, daß der Vorsteuerwert für die Luftmenge (300) wenigstens in Abhängigkeit der Parameter Temperatur, Getriebe bzw. Getriebeschalterstellung, harmonisch über ein Zeitglied ($T_2$-Glied), sowie nachgeschaltet wenigstens eines Klimaanlagenbetriebssignales generiert wird.

11. Verfahren nach Anspruch 10, dadurch gekennzeichnet, daß die Auf- bzw. Abschaltung mindestens des Klimaanlagenbetriebssignales wenigstens stückweise in Rampenform, insbesondere in stufenförmiger Rampenform erfolgt.

12. Verfahren nach einem der Ansprüche 1 bis 11, dadurch gekennzeichnet, daß ein Vorsteuerwert für die Leerlaufdrehzahl (200) gebildet wird, wenigstens in Abhängigkeit der Parameter Temperatur und Getriebeschalterstellung sowie einer multiplikativen Anhebung, wenn die Istdrehzahl signifikant größer als die Solldrehzahl aus wenigstens den beiden Größen ist, weiterhin wenigstens einem Klimaanlagenbetriebssignal und einem nachgeschalteten $T_1$-Filter, für harmonische Übergänge, dessen Zeitkonstante wenigstens in Abhängigkeit vom Startsignal und Schubabschaltungssignal gesteuert werden kann.

13. Verfahren nach Anspruch 12, dadurch gekennzeichnet, daß das Klimaanlagenbetriebssignal mit einem Getriebesignal verknüpft ist, welches eine untere Begrenzung der Solldrehzahl ergibt.

14. Verfahren nach einem der Ansprüche 1 bis 13, dadurch gekennzeichnet, daß der Leerlaufdrehzahlsollwert abzüglich des Drehzahlistwertes im Leerlauffall über wenigstens je ein P- (203) und ein I-Glied (204) der Stellgliedansteuerung zugeführt wird.

15. Verfahren nach einem der Ansprüche 1 bis 14, dadurch gekennzeichnet, daß der Luftmengensollwert dem Motorleistungsstellglied im Schubbetrieb über wenigstens einen Integrator (204) zugeführt wird.

16. Verfahren nach einem der Ansprüche 14 bis 15, dadurch gekennzeichnet, daß die Ansteuerung des Motorstellgliedes aus der Leerlaufdrehzahlregelung im Leerlauffall und aus der Regelung der Luftmenge im Schubfall über denselben Integrator (204) erfolgt, dadurch, daß je nach Betriebsfall je eine der Regelgrößen oder ein Nullsignal dem Integratoreingang zugeführt wird, so daß beim Übergang von einem auf den anderen Betriebsfall ein harmonischer Übergang sichergestellt ist.

17. Verfahren nach einem der Ansprüche 1 bis 16, dadurch gekennzeichnet, daß der Vorsteuerwert für die Luftmenge (300) ständig dem Stellglied des Motors zugeführt wird und im Fall einer Fahrzeuggeschwindigkeit größer Null zusammen mit dem Vorsteuerungswert für die Luftmenge dem Stellglied noch ein additiver Term (70) aus der Drehzahl über die Schubluftkennlinie (70) zugeführt wird.

18. Verfahren nach einem der Ansprüche 1 bis 17, dadurch gekennzeichnet, daß anstelle der Luftmenge eine Luftmasse Verwendung findet.

19. Verfahren nach einem der Ansprüche 1 bis 18, dadurch gekennzeichnet, daß zur Getriebeerkennung das elektrische Potential am Anlasserschalter (Kl 50) an der batterieabgewandten Seite abgegriffen wird und diskriminiert wird.

20. Verfahren nach Anspruch 9 und 19, dadurch gekennzeichnet, daß bei Fahrzeugen mit Getriebehandschaltung der Drehzahlgegenkopplungsterm auf geringere Werte als bei Automatikgetriebefahrzeugen begrenzt wird.

21. Einrichtung zur Beeinflussung der Luftzumessung für eine Brennkraftmaschine, vorzugweise im Leerlaufbetrieb und im Schubbetrieb,
 – mit Mitteln, die die Drehzahl der Brennkraftmaschine erfassen,
 – mit einem Regler zur Regelung der Drehzahl auf einen aus Betriebsparametern der Brennkraftmaschine und/oder des Kraftfahrzeugs vorbestimmten Wert über ein elektrisch ansteuerbares Motorleistungsstellglied,
 – mit Mitteln, die die angesaugte Luftmenge erfassen,
 – und Mittel, die im erkannten Leerlaufzustand eine erste, außerhalb des Leerlaufzustandes unveränderliche Größe bilden, welch ein Maß für diese Luftmenge darstellt, dadurch gekennzeichnet, daß
 – weitere Mittel vorhanden sind, die bei erkanntem Schubbetrieb der Brennkraftmaschine eine zweite Größe, die ein Maß für die im Schubbetrieb tatsächlich angesaugte Luftmenge darstellt, bilden,
 – der Regler das Motorleistungsstellglied auf der Basis der ersten und der zweiten Größe im Sinne einer Regelung der zweiten auf die erste Größe beeinflußt.

22. Einrichtung nach Anspruch 21, dadurch gekennzeichnet, daß Mittel für eine Vorsteuerung der Luftmenge (300) vorgesehen sind, abhängig von den Parametern Temperatur, Getriebe bzw. Getriebeschaltung und Klimaanlagenbetriebssignal.

23. Einrichtung nach Anspruch 21 oder 22, dadurch gekennzeichnet, daß die Leerlaufdrehzahlregelung im Leerlauffall und die Schubluftregelung im Schubbetriebsfall mit einem einzigen I-Regler (204) vorgenommen wird.

24. Einrichtung nach einem der Ansprüche 21 bis 23, dadurch gekennzeichnet, daß die einzelnen Mittel und Vorgänge programmgesteuert sind.

## Claims

1. Method for influencing the air proportioning for an internal combustion engine, preferably in idling mode and overrun mode,
 – in which method the rotational speed of the internal combustion engine is detected and, when idling condition is detected, the rotational speed of the internal combustion engine is controlled to a value predetermined from operating parameters of the internal combustion engine and/or of the motor vehicle by influencing the air proportioning via an electrically drivable engine power actuator,
 – in which method the air volume taken in is detected and, when idling condition is detected, a first quantity is formed which is invariable outside the idling condition and which represents a measure of this air volume,
characterised in that
 – when the overrun mode of the internal combustion engine is detected, the electrically drivable engine power actuator is influenced on the basis of this first and of a second quantity, which represents a measure of the air volume actually taken in in overrun mode, in the sense of a closed-loop control of the second quantity to the first quantity.

2. Method according to Claim 1, characterised in that the second quantity representing the air volume in overrun mode is corrected by precontrol values and/or the first quantity representing a stored air volume value exhibits corrections by means of precontrol values.

3. Method according to one of Claims 1 to 2, characterised in that the storage occurs as integration over time and the respective integration result can be kept static following a control command.

4. Method according to Claim 3, characterised in that the speed of integration, that is to say the rate of change of the integral, with a constant input signal is dependent on the sign of the input signal.

5. Method according to Claim 4, characterised in that the speed of integration is greater with a negative input signal than with a positive input signal.

6. Method according to one of Claims 1 to 5, characterised in that the stored air volume value can be complemented rotational-speed-dependently via the overrun air characteristic (70) in overrun mode.

7. Method according to one of Claims 1 to 6, characterised in that when the vehicle is moving, a fixed nominal amount (80) can be added to the overrun air for variable additional loads, particularly of power-assisted steering.

8. Method according to one of Claims 1 to 7, characterised in that a further fixed amount is added to the overrun air when using (90) the fuel overrun disconnect mode, which amount, when it drops below a rotational-speed threshold between the fuel disconnect rotational-speed and the restarting rotational speed, is controlled down to a nominal rotational-speed-dependent fixed value, originating from the precontrol of the rotational speed, in a time pattern and this residual value is only controlled down on restarting.

9. Method according to one of Claims 1 to 8, characterised in that to the air volume taken in in overrun mode, a limited rotational-speed negative feedback term is also added, the maximum size of which is dependent on whether this is a vehicle with automatic transmission or with manual gear change.

10. Method according to one of Claims 2 to 9, characterised in that the precontrol value for the air volume (300) is harmoniously generated, at least in dependence on the parameters of temperature, transmission and gearlever position, via a timing section ($T_1$ section) and subsequently at least one air-conditioning system operating signal.

11. Method according to Claim 10, characterised in that the connection and disconnection of at least the air-conditioning system operating signal occurs at least piece by piece in ramp form, particularly in step-shaped ramp form.

12. Method according to one of Claims 1 to 11, characterised in that a precontrol value for the idling rotational speed (200) is formed at least in dependence on the paramaters of temperature and gear-lever position and a multiplicative raising if the actual rotational speed is significantly greater than the nominal rotational speed from at least the two quantities, furthermore at least one air-conditioning system operating signal and a subsequent $T_1$ filter for harmonious transitions, the time constant of which can be controlled at least in dependence on the starting signal and overrun disconnect signal.

13. Method according to Claim 12, characterised in that the air-conditioning system operating signal is combined with a transmission signal which results in a lower limiting of the nominal rotational speed.

14. Method according to one of Claims 1 to 13, characterised in that the nominal idling rotational-speed value minus the actual rotational-speed value is supplied via at least one P (203) and one I section (204) each to the actuator drive in the idling case.

15. Method according to one of Claims 1 to 14, characterised in that the nominal air volume value is supplied to the engine power actuator in overrun mode via at least one integrator (204).

16. Method according to one of Claims 14 to 15, characterised in that the engine actuator is driven from the closed-loop idling rotational-speed control in the idling case and from the closed-loop control of the air volume in the overrun case via the same integrator (204), in that, depending on operating case, one of the controlled variables each or a zero signal is supplied to the integrator input so that a harmonious transition is ensured during the transition from one to the other operating case.

17. Method according to one of Claims 1 to 16, characterised in that the precontrol value for the air volume (300) is continuously supplied to the actuator of the engine and in the case of a vehicle speed of greater than zero, together with the precontrol value for the air volume, the actuator is also supplied with an additive term (70) from the rotational speed via the overrun air characteristic (70).

18. Method according to one of Claims 1 to 17, characterised in that instead of the air volume, an air mass is used.

19. Method according to one of Claims 1 to 18, characterised in that the electrical potential at the starter switch (KL 50) is picked up at the end facing away from the battery and discriminated for detecting the type of transmission.

20. Method according to Claims 9 and 19, characterised in that in the case of vehicles with manual gear change, the rotational-speed negative feedback term is limited to lower values than in the case of automatic-transmission vehicles.

21. Device for influencing the air proportioning for an internal combustion engine, preferably in idling mode and in overrun mode,
   – comprising means which detect the rotational speed of the internal combustion engine,
   – comprising a controller for controlling the rotational speed to a value predetermined from operating parameters of the internal combustion engine and/or of the motor vehicle, via an electrically drivable engine power actuator,

– comprising means which detect the air volume taken in,

– and means which, when idling condition is detected, form a first quantity which is invariable outside the idling condition and represents a measure of this air volume,

characterised in that

– further means exist which, when overrun mode of the internal combustion engine is detected, form a second quantity which represents a measure of the air volume actually taken in in overrun mode,

– the controller influences the engine power actuator on the basis of the first and the second quantity in the sense of a closed-loop control of the second to the first quantity.

22. Device according to Claim 21, characterised in that means for precontrolling the air volume (300) are provided, dependent on the parameters of temperature, transmission or gear change and air-conditioning operating signal.

23. Device according to Claim 21 or 22, characterised in that the closed-loop idling rotational-speed control in the idling case and the closed-loop overrun air control in the overrun operating case is effected by means of a single I controller (204).

24. Device according to one of Claims 21 to 23, characterised in that the individual means and processes are program-controlled.


**Revendications**

1. Procédé pour régler le dosage d'air pour un moteur à combustion interne, de préférence au ralenti, et en décélération,

– procédé dans lequel la vitesse de rotation du moteur à combustion interne est détectée et lorsque l'état de ralenti est reconnu, une régulation de la vitesse de rotation du moteur à combustion interne est mise en oeuvre sur une valeur prédéfinie à partir de paramètres de fonctionnement du moteur à combustion interne et/ou du véhicule automobile, en influençant le dosage d'air par l'intermédiaire d'un organe de réglage de la puissance du moteur susceptible d'être commandé électriquement,

– la quantité aspirée est détectée et lorsque l'état de ralenti est identifié, une première grandeur, non modifiable en dehors de l'état de ralenti, est formée et représente une mesure pour cette quantité d'air,

procédé caractérisé en ce que

– lorsque le fonctionnement en décélération du moteur à combustion interne est reconnu, l'organe de réglage de la puissance du moteur susceptible d'être commandé électriquement, est influencé sur la base de cette première grandeur et d'une deuxième grandeur qui représentent une mesure pour la quantité d'air aspirée effectivement dans le fonctionnement en décélération, dans le sens d'une régulation de la deuxième grandeur sur la première.

2. Procédé selon la revendication 1, caractérisé en ce que la seconde grandeur représentant la quantité d'air dans le fonctionnement en décélération, est corrigée par des valeurs de précommande et/ou la première grandeur représentant une valeur de quantité d'air mémorisée comporte des corrections par des valeurs de précommande.

3. Procédé selon une des revendications 1 à 2, caractérisé en ce que la mémorisation s'effectue sous la forme d'intégration en fonction du temps et le résultat d'intégration respectif peut être maintenu statiquement sur un moyen de commande.

4. Procédé selon la revendication 3, caractérisé en ce que la vitesse d'intégration, c'est-à-dire le taux de modification de l'intégrale pour un signal d'entrée constant, dépend du signe du signal d'entrée.

5. Procédé selon la revendication 4, caractérisé en ce que la vitesse d'intégration est plus grande dans le cas d'un signal d'entrée négatif que dans le cas d'un signal d'entrée positif.

6. Procédé selon une des revendications 1 à 5, caractérisé en ce que la valeur de la quantité d'air mémorisée peut être complétée dans le fonctionnement en décélération en fonction de la vitesse de rotation par l'intermédiaire de la courbe caractéristique d'air en décélération (70).

7. Procédé selon une des revendications 1 à 6, caractérisé en ce que lorsque le véhicule est en marche, une valeur de consigne fixe (80) peut être ajoutée à l'air de décélération pour des charges supplémentaires variables, notamment la direction assistée.

8. Procédé selon une des revendications 1 à 7, caractérisé en ce qu'une autre valeur fixe est ajoutée à l'air de décélération lors de la mise en oeuvre (90) de l'arrêt du carburant en décélération, qui lors du franchissement vers le bas d'un seuil de vitesse de rotation entre la vitesse de rotation d'arrêt du carburant et la vitesse de rotation de remise en oeuvre, peut être réglée vers le bas avec une trame de temps à une valeur fixe dépendante de la vitesse de rotation de consigne et émanant de la précommande de la vitesse de rotation.

9. Procédé selon une des revendications 1 à 8, caractérisé en ce qu'à la quantité d'air aspirée en décélération, est en outre ajouté un terme de contre réaction ce la vitesse de rotation dont la grandeur maximale est dépendante de ce qu'il s'agit d'un véhicule avec boîte de vitesses automatique ou d'une boîte de vitesses non automatique.

10. Procédé selon une des revendications 2 à 9, caractérisé en ce que la valeur de précommande pour la quantité d'air (300) est engendrée au moins en fonction des paramètres température, position de la boîte de vitesses ou du commutateur de la boîte de vitesses, harmoniquement par l'intermédiaire d'un organe de temporisation (organe T₁), ainsi que d'au moins un signal de fonctionnement d'installation climatique branché à la suite.

11. Procédé selon la revendication 10, caractérisé en ce que la mise en ou hors circuit d'au moins le signal de fonctionnement de l'installation de climatisation, s'effectue au moins pièce par pièce sous forme de rampes, notamment sous forme de rampes à échelons.

12. Procédé selon une des revendications 1 à 11, caractérisé en ce qu'une valeur de précommande pour la vitesse de rotation au ralenti (200) est formée, au moins en fonction des paramètres température, et position du commutateur de la boîte de vitesses, ainsi que d'un renforcement multiplicatif, lorsque la vitesse de rotation réelle est supérieure d'une façon significative à la vitesse de rotation de consigne, extraite d'au moins ces deux grandeurs, en outre, d'au moins un signal de fonctionnement de l'installation de climatisation et d'un filtre $T_1$ branché à la suite, pour des transitions harmoniques, et dont la constante de temps peut être commandée en fonction du signal de démarrage et du signal de fin de décélération.

13. Procédé selon la revendication 12, caractérisé en ce que le signal de fonctionnement de l'installation de climatisation est combiné avec un signal de fonctionnement qui donne une limitation inférieure de la vitesse de rotation de consigne.

14. Procédé selon une des revendications 1 à 13, caractérisé en ce que la valeur de consigne de la vitesse de rotation au ralenti, déduction faite de la valeur réelle de la vitesse de rotation, dans le cas de ralenti, est appliquée par l'intermédiaire d'au moins respectivement un organe P (203) et un organe I (204) à la commande de l'organe de réglage.

15. Procédé selon une des revendications 1 à 14, caractérisé en ce que la valeur de consigne de la quantité d'air est appliquée à l'organe de réglage de la puissance du moteur en fonctionnement de décélération par l'intermédiaire d'au moins un intégrateur (204).

16. Procédé selon une des revendications 15 et 15, caractérisé en ce que la commande de l'organe de réglage du moteur s'effectue à partir de la régulation de vitesse de rotation au ralenti dans le cas d'un ralenti et à partir de la régulation de la quantité d'air, dans le cas de décélération, par l'intermédiaire au même intégrateur (204), du fait que selon le cas de fonctionnement, respectivement une des grandeurs de réglage ou bien un signal zéro est appliqué à l'entrée de l'intégrateur, de sorte que lors du passage de l'un à l'autre cas de fonctionnement, une transition harmonieuse est assurée.

17. Procédé selon une des revendications 1 à 16, caractérisé en ce que la valeur de précommande pour la quantité d'air (300) est constamment appliquée à l'organe de réglage du moteur et que dans le cas d'une vitesse du véhicule supérieure à zéro, conjointement à cette valeur de précommande pour la quantité d'air, un terme additif (70) issu de la vitesse de rotation par l'intermédiaire de la courbe caractéristique d'air en poussée (70) est en outre appliqué à l'organe de réglage.

18. Procédé selon une des revendications 1 à 17, caractérisé en ce qu'au lieu de la quantité d'air, une masse d'air est utilisée.

19. Procédé selon une des revendications 1 à 18, caractérisé en ce que pour l'identification du fonctionnement, le potentiel électrique au commutateur du démarreur (KI 50) est prélevé et discriminé sur le côté opposé à la batterie.

20. Procédé selon l'une des revendications 9 et 19, caractérisé en ce que, dans le cas de véhicule sans boîte automatique, le terme de contre réaction de la vitesse de rotation est limité à des valeurs plus réduites que dans le cas de véhicule à boîte automatique.

21. Dispositif pour régler le dosage d'air d'un moteur à combustion interne, de préférence au ralenti et en décélération,
- avec des moyens pour détecter la vitesse de rotation du moteur à combustion interne,
- avec un régulateur pour la régulation, par l'intermédiaire d'un organe de réglage de la puissance du moteur susceptible d'être commandé électriquement, à une valeur prédéfinie à partir de paramètres de fonctionnement du moteur à combustion interne et/ou du véhicule,
- avec des moyens pour détecter la quantité d'air aspirée,
- et avec des moyens qui, lorsque l'état de ralenti est identifié, forment une grandeur, non modifiable en dehors de l'état de ralenti, et qui constitue une mesure pour la quantité d'air,
dispositif caractérisé en ce que :
- il est prévu d'autres moyens qui lorsque le fonctionnement en décélération du moteur à combustion interne est identifié, forment une seconde grandeur qui représente une mesure pour la quantité d'air effectivement aspirée en fonctionnement de décélération,
- le régulateur influence l'organe de réglage de la puissance du moteur sur la base de la première et de la seconde grandeur dans le sens d'une régulation de la seconde grandeur sur la première.

22. Dispositif selon la revendication 21, caractérisé en ce que des moyens sont prévus pour une précommande de la quantité d'air (300) en fonction des paramètres température, boîte de vitesses ou commutation de la boîte de vitesses et signal de fonctionnement de l'installation le climatisation.

23. Dispositif selon la revendication 21 ou la revendication 22, caractérisé en ce que la régulation de la vitesse de rotation au ralenti dans le cas le ralenti et la régulation de l'air en décélération dans le cas du fonctionnement en décélération, sont mises en oeuvre avec un unique régulateur I (204).

24. Dispositif selon une des revendications 21 à 23, caractérisé en ce que les différents moyens et processus sont programmés.

FIG.1

FIG.2

FIG.3

FIG.4

FIG.5A

+        R

KL.50      G

M

FIG.5B

+        R

KL.50      G

P, N     D

M

FIG.6

$\dot{Q}$

B

$\dot{Q}_S$     A

$N_S$     N